# FASCICULE DE BREVET EUROPEEN

(11) **EP 1 797 683 B1**
(45) Date de publication et mention de la délivrance du brevet: **06.05.2015**
(21) Numéro de dépôt: 05798600.2
(22) Date de dépôt: 22.08.2005
(51) Int. Cl.: H04L 12/70

(54) **PROCEDE ET SYSTEME DE TRANSMISSION DE DONNEES ENTRE UN RESEAU LOCAL ET UN RESEAU PRINCIPAL AUTORISANT UNE ADAPTATION DU FORMAT DESDITES DONNEES**
VERFAHREN UND SYSTEM ZUR DATENÜBERTRAGUNG ZWISCHEN EINEM LOKALEN NETZWERK UND EINEM HAUPTNETZWERK UNTER AUTHORISIERUNG VON FORMATANPASSUNG DER DATEN
METHOD AND SYSTEM FOR DATA TRANSMISSION BETWEEN A LOCAL AREA NETWORK AND A MAIN NETWORK AUTHORIZING FORMAT ADAPTATION OF SAID DATA

(30) Priorité: 07.10.2004 FR 0410582
(43) Date de publication de la demande: 20.06.2007
(73) Titulaire: Orange, 75015 Paris (FR)
(72) Inventeur: MATHIEU, Bertrand, 22560 Pleumeur-Bodou (FR); CARLINET, Yannick, F-22300 Lannion (FR); MASSALOUX, Dominique, F-22700 Perros-Guirec (FR)
(86) Numéro de dépôt international: PCT/FR2005/002125
(87) Numéro de publication internationale: WO 2006/040423

(56) Documents cités:
- HUA CAI ET AL: "A novel low-complexity packetization method for fine-granularity scalable (FGS) video streaming" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, vol. 3, 15 décembre 2003 (2003-12-15), pages 1375-1379, XP010702857 ISBN: 0-7803-8185-8
- YINGWEI CHEN ET AL: "Robust video streaming over wireless LAN with efficient scalable coding and prioritized adaptive transmission" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 septembre 2003 (2003-09-14), pages 285-288, XP010670347 ISBN: 0-7803-7750-8
- KOVESI B ET AL: "A scalable speech and audio coding scheme with continuous bitrate flexibility" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 1, 17 mai 2004 (2004-05-17), pages 273-276, XP010717618 ISBN: 0-7803-8484-9
- TSAROUCHIS C ET AL: "A POLICY-BASED MANAGEMENT ARCHITECTURE FOR ACTIVE AND PROGRAMMABLE NETWORKS" IEEE NETWORK, IEEE INC. NEW YORK, US, vol. 17, no. 3, mai 2003 (2003-05), pages 22-28, XP001163642 ISSN: 0890-8044
- ZHIJUN LEI ET AL: "Rate adaptation transcoding for video streaming over wireless channels" MULTIMEDIA AND EXPO, 2003. PROCEEDINGS. 2003 INTERNATIONAL CONFERENCE ON 6-9 JULY 2003, PISCATAWAY, NJ, USA,IEEE, vol. 2, 6 juillet 2003 (2003-07-06), pages 433-436, XP010650669 ISBN: 0-7803-7965-9

## Description

La présente invention concerne un système de télécommunication incluant au moins un réseau local destiné à communiquer avec un réseau principal, par exemple un réseau maillé de type Internet, *via* au moins un élément intermédiaire au travers duquel des paquets de données sont destinés à transiter depuis le réseau local vers le réseau principal et réciproquement.

Des procédés de transmission de données sont couramment utilisés pour permettre à des utilisateurs de réseaux locaux de communiquer avec le réseau Internet. Ces réseaux locaux peuvent être par exemple mis à disposition d'une population particulière, comme les clients d'un hôtel ou d'un aéroport, et peuvent être réalisés en mettant en oeuvre une technologie de transmission de données par paquets compatibles avec un protocole de type Internet, que cette technologie soit câblée comme par exemple la technologie PLT (abréviation connue de l'homme du métier de l'expression anglaise "Power Line Telecommunication"), ou encore sans-fils comme par exemple la technologie connue de l'homme du métier sous l'appellation "Wi-Fi" et définie par la norme IEEE 802.11 Ces réseaux locaux sont de plus en plus répandus, déployés et utilisés, car ils offrent une alternative ou un complément à des réseaux sans-fils appartenant à des opérateurs de télécommunication comme les réseaux GSM, GPRS ou UMTS (abréviations connues de l'homme du métier des appellations anglaises "Global System for Mobiles", "Général Packet Radio Service" et "Universal Mobile Télécommunication System", respectivement). Ces réseaux locaux présentent en outre une grande simplicité d'installation et de configuration, un coût minime d'utilisation et offrent une intégration parfaite avec le protocole "IP" (abréviation connue de l'homme du métier de l'appellation "Internet Protocol") qui est une référence pour toute télécommunication mettant en oeuvre le réseau Internet.

La présente invention est liée aux considérations suivantes, qui résultent de travaux exécutés par les inventeurs.

Un réseau local tel ceux décrits plus haut offre usuellement une bande passante qui est partagée entre tous les utilisateurs de ce réseau, ce qui implique que la bande passante disponible peut être amenée à varier considérablement d'un instant donné à un autre, en fonction du volume de communication en cours à l'instant considéré, lequel volume dépend entre autres facteurs du nombre de terminaux connectés audit réseau, ainsi que de la nature des applications en cours d'exécution au sein desdits terminaux, c'est-à-dire de la nature des données en cours de transmission par ou vers ces terminaux. En effet, le volume de communication généré par une exécution d'un téléchargement est bien supérieur à celui généré par une simple consultation d'un site Internet ou par une communication purement vocale. De même, le volume de communication généré par une visualisation d'un programme audiovisuel tel une oeuvre cinématographique est bien supérieur à celui généré par une simple lecture d'un message électronique de type "mél".

Ainsi, les inventeurs ont constaté qu'en cas de surcharge du réseau local due à une mise en communication d'un trop grand nombre d'utilisateurs ou à une consommation disproportionnée de bande passante par certaines applications, ledit réseau local ne pourra offrir qu'une qualité de service dégradée à ses utilisateurs, dégradation qui résultera le plus souvent de pertes de paquets de données se traduisant par des éléments manquants dans les informations transmises ou reçues par les utilisateurs du réseau local lorsqu'il est surchargé.

Le document "A novel low-complexity packetization method for fine-granularity scalable (FGS) video streaming" de Hua Cai et al. décrit un principe général d'évaluation d'un débit disponible et de transcodage de paquets de données encodées hiérarchiquement pour s'adapter au débit disponible.

Le document "Rate adaptation transcoding for video streaming over wireless channels" de Zhijun Lei et al. décrit un procédé d'adaptation de débit de transcodage d'un flux vidéo transmis via une liaison sans fil dans un point d'accès.

L'un des buts de l'invention est de minimiser l'impact d'une surcharge d'un réseau local qui se produirait dans les conditions sus-décrites, en proposant un procédé de transmission qui tend à assurer que, même en cas d'une telle surcharge, les paquets de données devant transiter par le réseau local seront acheminés vers leurs destinataires, éventuellement sous une forme fragmentaire par rapport à leur forme originale. L'invention vise ainsi à autoriser une adaptation aussi peu destructrice d'informations que possible du volume des communications échangées entre différents réseaux mis en oeuvre dans un système de télécommunication conforme à la description qui précède.

En effet, un système de télécommunication conforme au paragraphe introductif est caractérisé selon la revendication 1.

L'invention permet de réduire de façon automatique la taille des paquets de données devant transiter par le réseau local lorsqu'une surcharge dudit réseau aura été détectée par comparaison entre le volume de communications en cours et le seuil prédéterminé, et ce sans recourir à une élimination systématique et discriminatoire d'un type particulier de données en fonction de la nature de l'application à laquelle de telles données seraient associées, puisque tout paquet de données transitant au travers de l'élément intermédiaire dans une telle situation pourra faire l'objet d'une troncature. Un tel principe de non-élimination permet d'assurer une certaine continuité de service à tous les usagers du réseau local, contrairement à ce qui serait obtenu s'il était choisi de privilégier certains utilisateurs ou certaines applications au dépends des autres, qui pourraient alors voir leurs données purement et simplement ignorées, de sorte que le service les concernant serait interrompu au risque de provoquer une profonde insatisfaction chez ces autres utilisateurs.

Le service dont la continuité sera ainsi préservée pourra présenter une qualité inférieure à la qualité usuellement produite en l'absence de surcharge, mais il convient de noter qu'à défaut d'utiliser le système conforme à l'invention, des paquets de données seront inévitablement perdus en cas de surcharge, provoquant ainsi une interruption totale du service concernant certains utilisateurs, de sorte que l'éventuel mécontentement créé chez ces utilisateurs par la seule troncature de données les concernant constituera un moindre mal. Ceci est d'autant plus exact que tous les utilisateurs connectés au réseau local ne le seront pas nécessairement au moyen d'un terminal apte à exploiter pleinement l'ensemble du contenu informatif d'un paquet de données. Ainsi, si un terminal de type PC (abréviation connue de l'homme du métier de l'expression anglaise "Personal Computer") est apte à exploiter dans sa totalité un paquet formant une trame audio, un terminal de type PDA (abréviation connue de l'homme du métier de l'expression anglaise "Personal Digital Assistant") ne pourra en exploiter qu'une partie et un terminal de type radiotéléphone ne pourra en exploiter qu'une partie plus petite encore, de sorte qu'une troncature d'une telle trame audio opérée selon l'invention en cas de surcharge pourra n'être même pas ressentie par les utilisateurs de terminaux de type PDA ou radiotéléphone, ce qui corrobore la pertinence de la présente invention.

La troncature pourra être exécutée de diverses manières, mais inclura avantageusement une sous-étape d'encodage hiérarchique au cours de laquelle le contenu d'un paquet de données est encodé en un segment primaire de données et en une pluralité de segments secondaires de données destinés à être accolés au segment primaire de données.

Le segment primaire de données constituera de préférence un ensemble cohérent et représentatif, quoique imparfaitement, du paquet de données d'origine, et devra pouvoir être exploité de façon autonome par tout type de terminal destiné à être mis en oeuvre au sein du réseau local. Ainsi, c'est la taille minimale des paquets destinés à celui des terminaux qui est apte à traiter les paquets les moins volumineux qui déterminera en pratique le format du segment primaire de données.

Les segments secondaires de données pourront avoir des tailles différentes d'un segment secondaire à un autre, et pourront théoriquement être accolés dans n'importe quel ordre au segment primaire de données. Il sera cependant préférable en pratique de les accoler successivement au segment primaire selon un ordre d'importance décroissant prédéterminé.

Ainsi, des segments secondaires successifs apporteront progressivement une meilleure définition de l'information véhiculée par le paquet de données ré-assemblé, de sorte que plus la taille des paquets de données aptes à être traitées par un terminal sera importante, plus l'information qui lui parviendra après troncature sera cohérente et significative. En effet, les données interprétées par ce terminal formeront alors une suite continue selon un degré de précision croissante, alors qu'une répartition aléatoire des segments secondaires risquerait de mener à des situations dans lesquels un terminal pourrait recevoir des détails, véhiculés par un premier segment secondaire de données, qui concerneraient un élément défini dans un deuxième segment secondaire de données qui n'aurait, lui, pas encore été ou ne sera peut-être jamais reçu par le terminal en question. Si aucune précaution n'est prise pour éviter que de telles situations ne se produisent, les informations véhiculées par le premier segment secondaire de données devront être mémorisées en vue d'une utilisation ultérieure et risquent même de s'avérer totalement inexploitables, l'une ou l'autre de ces hypothèses aboutissant en pratique à une qualité de service sous-optimale.

Selon un mode de réalisation particulier d'un tel système de télécommunication, les moyens de troncature incluront avantageusement une pluralité de modules de troncature, chacun étant destiné à être activé lorsque le volume de communications est supérieur à un seuil prédéterminé associé au module de troncature considéré.

Chaque module de troncature pourra être dédié à un genre particulier d'informations pouvant être véhiculé par les paquets de données, par exemple, des données purement audio, des données audiovisuelles ou encore des données textuelles, chaque genre possédant une sensibilité propre vis-à-vis de possibles surcharges. Ainsi, chaque module de troncature pourra être apte à appliquer un encodage particulier adapté à la sensibilité particulière présentée par les informations relevant du genre auquel le module de troncature considéré est dédié. Différents modules de troncature pourront en outre avoir été conçus par différents opérateurs de télécommunication en tenant compte de paramètres propres à chacun dans le but de garantir une qualité de service optimale à leurs abonnés respectifs.

Enfin, dans un mode de mise en oeuvre complémentaire du mode de réalisation particulier décrit ci-dessus, l'élément intermédiaire pourra être muni d'une voie de requête vers un tiers, tel un ou plusieurs opérateurs de télécommunication et/ou fournisseurs de service, laquelle voie de requête sera destinée à permettre audit élément intermédiaire de requérir auprès d'un ou plusieurs de ces opérateurs l'installation d'un ou plusieurs modules de troncature supplémentaires à ceux déjà intégrés dans les moyens de troncature. Un tel mode de mise en oeuvre de l'invention autorise donc un déploiement dynamique de modules de troncature, et confère ainsi aux moyens de troncature une capacité d'adaptation aux conditions de communication régnant dans le système de télécommunication.

Les caractéristiques de l'invention mentionnées ci-dessus, ainsi que d'autres, apparaitront plus clairement à la lecture de la description suivante d'un exemple de réalisation, ladite description étant faite en relation avec la Fig.l, qui est un schéma fonctionnel illustrant le principe opératoire d'un système de télécommunication SYST conforme à l'invention.

Ce système SYST inclut dans cet exemple un réseau local WLAN destiné à communiquer avec un réseau principal INTNW, par exemple un réseau maillé de type Internet, *via* un élément intermédiaire INTM au travers duquel des paquets de données Dpo et Dpi, sont destinés à transiter depuis le réseau local vers le réseau principal et réciproquement.

Dans l'exemple représenté ici, le réseau local WLAN est un réseau de communication sans-fils de type Wi-Fi compatible avec la norme IEEE 802.11, de sorte que l'élément intermédiaire INTM est constitué par un point d'accès muni d'un système d'antenne d'émission/réception ANT, apte à convertir des signaux électromagnétiques reçus depuis le réseau local WLAN en signaux adaptés à une transmission filaire au sein du réseau de type Internet INTNW, et réciproquement. Dans un tel mode de réalisation, le point d'accès constitutif de l'élément intermédiaire INTM pourra aussi être apte à remplir des fonctions de serveur de noms de domaine de type DHCP (abréviation connue de l'homme du métier de l'expression anglaise "Domain Host Control Protocol") et fournir ainsi des adresses IP à ses utilisateurs. Ce point d'accès pourra également être apte à opérer des translation d'adresses dans le but de masquer des adresses propres à certains utilisateurs du réseau local WLAN, voire servir de passerelle pare-feu à de tels utilisateurs.

Alternativement, dans un cas ou le réseau local WLAN est réalisé en technologie câblée comme par exemple la technologie PLT, l'élément intermédiaire INTM sera constitué par une passerelle qui pourra également être munie des fonctionnalités sus-décrites.

Le système SYST inclut des moyens d'encodage ENCM qui sont ici connexes à l'élément intermédiaire INTM, et qui sont destinés à transformer les paquets de données d'entrée Dpi en des paquets encodés Epi. Les moyens d'encodage ENCM sont ainsi aptes à transformer le contenu d'un paquet de données Dpi en un segment primaire de données et en une pluralité de segments secondaires de données destinés à être accolés au segment primaire de données, les segments secondaires de données étant de préférence successivement accolés au segment primaire selon un ordre d'importance décroissant prédéterminé afin de former un paquet de données hiérarchisé Epi.

Dans l'illustration qui en est faite ici, un paquet de données d'entrée Dpi est représenté graphiquement sous forme d'un rectangle noirci, signifiant que ce paquet forme un tout cohérent et indivisible. Un paquet de données Epi encodé hiérarchiquement après exécution d'une étape d'encodage hiérarchique est, lui, formé par un segment primaire de données représenté sous forme d'un rectangle noirci de taille inférieure de moitié au paquet Dpi, lequel segment primaire est suivi de quatre segments secondaires caractérisés par différents modes de remplissage. Si, dans cet exemple, les segments secondaires ont tous une même taille, d'autres protocoles d'encodage pourront prévoir d'attribuer des tailles différentes à différents segments secondaires.

Dans d'autres modes de mise en oeuvre de l'invention, une telle étape d'encodage pourra ne pas être exécutée systématiquement, mais au contraire uniquement lorsqu'une surcharge du réseau local aura été détectée. Dans une telle configuration, qui permet d'éviter de solliciter inutilement des ressources de calcul considérables alors qu'aucun reformatage des paquets d'entrée n'est nécessaire, les moyens d'encodage seront alors de préférence intégrés au sein même de l'élément *intermédiaire. A contrario*, s'il a été fait un choix d'encodage systématique, les moyens d'encodage pourront être physiquement séparés de l'élément intermédiaire INTM, voire être inclus dans le réseau principal INTNW.

Conformément à l'invention, ce système SYST inclut :
- des moyens d'évaluation NWPB d'un volume de communications en cours de déroulement au sein du réseau local WLAN, et
- des moyens de troncature (TC1, TC2, TC3...TCN) de paquets de données Epi transitant au travers de l'élément intermédiaire INTM, lesquels moyens de troncature incluent dans cet exemple une pluralité de modules de troncature TC1, TC2, TC3...TCN, chaque module de troncature TCi (pour i=1 à N) étant destiné à être activé lorsque le volume de communications est supérieur à un seuil prédéterminé Thi associé au module de troncature considéré TCi.

Ainsi qu'expliqué plus haut, chaque module de troncature TCi (pour i=1 à N) pourra être dédié à un genre particulier d'informations pouvant être véhiculé par les paquets de données Epi, par exemple, des données purement audio, des données audiovisuelles ou encore des données textuelles, chaque genre possédant une sensibilité propre vis-à-vis de possibles surcharges. Ainsi, chaque module de troncature TCi (pour i=1 à N) pourra être apte à appliquer un mode de troncature particulier adapté à la sensibilité particulière présentée par les informations relevant du genre auquel le module de troncature TCi considéré est dédié. Différents modules de troncature pourront en outre avoir été conçus par différents opérateurs de télécommunication en tenant compte de paramètres propres à chacun, dans le but de garantir une qualité de service optimale à leurs abonnés respectifs.

Dans le mode de mise en oeuvre de l'invention décrit ici, le seuil prédéterminé Thi associé à chaque module de troncature TCi sera mémorisé dans un registre de seuil THREG lors de l'installation de chacun de ces modules au sein de l'élément intermédiaire INTM. Selon une variante avantageuse, les valeurs de ses seuils prédéterminés Thi (pour i=1 à N) pourront être modifiées par téléchargement depuis le réseau de type Internet INTW suivant une voie de communication qui n'est pas représentée ici. Une telle voie pourra en outre être utilisée pour permettre un déploiement dynamique, éventuellement sur requête préalablement émise par l'élément intermédiaire vers un tiers tel un ou plusieurs opérateurs de télécommunication et/ou fournisseurs de service, d'un ou plusieurs modules de troncature supplémentaires.

Ainsi qu'exposé précédemment, les moyens de troncature (TC1, TC2, TC3...TCN) prévus conformément à l'invention sont aptes à tronquer le contenu d'un paquet de données hiérarchisé Epi préalablement formaté en un segment primaire de données auquel sont accolés plusieurs segments secondaires de données agencés selon un ordre d'importance décroissant prédéterminé.

Dans l'illustration qui en est faite ici, un paquet de données hiérarchisées tronqué Tepi obtenu après exécution d'une étape de troncature est représenté graphiquement sous forme d'un segment primaire de données représenté sous forme d'un rectangle noirci de taille inférieure de moitié à celle d'un paquet de données d'entrée Dpi, lequel segment primaire n'est plus suivi ici que par deux segments secondaires immédiatement adjacents audit segment primaire. Les paquets tronqués Tepi représentent donc un volume de données moins important que celui des paquets d'entrée Dpi, de sorte que la mise en oeuvre d'une étape de troncature hiérarchique systématique telle celle décrite plus haut permettra de résorber au moins partiellement, la surcharge qui aura mené à cette mise en oeuvre.

Les moyens d'évaluation NWPB sont ici constitués par une sonde solidaire du système d'antenne d'émission/réception ANT, et sont donc aptes à capturer toute trame qui circule au travers de l'élément intermédiaire INTM. Ces moyens d'évaluation NWPB sont destinés à générer un signal d'information Cvol ayant une valeur qui véhicule une information représentative de la bande passante occupée au sein du réseau local à l'instant considéré, ledit signal d'information Cvol pouvant en outre véhiculer une information relative à un ou plusieurs flux supportés par une ou plusieurs connexions, etc. Ce signal d'information Cvol est ainsi représentatif du volume de communications en cours de déroulement au sein du réseau local WLAN, et est fourni à un module de gestion MNGM destiné à comparer la valeur dudit signal aux seuils prédéterminés Th1, Th2, Th3...ThN issus du registre de seuil THREG. Ce module de gestion MNGM est en outre destiné à activer tout module de troncature TCi associé à un seuil Thi qui se révèlera inférieur à la valeur du signal d'information Cvol, ce qui signifiera qu'une surcharge du réseau local WLAN est atteinte et doit être prise en compte en réduisant le volume du flux des paquets de données qui sont destinés à ce réseau local WLAN, et en en adaptant le format de manière à rendre lesdits paquets moins sensibles à de possibles pertes de transmission.

Dans une telle situation, le module de gestion MNGM signale par un envoi d'un signal de contrôle Trk à un filtre de réseau NFLT que les paquets de données d'entrée Epi que ledit filtre de réseau NFLT reçoit depuis le réseau de type Internet INTNW doivent être envoyés au module de gestion MNGM plutôt qu'au système d'antenne d'émission/réception ANT, de manière à ce que ces paquets de données d'entrée Epi puissent être soumis à une troncature par les moyens de troncature (TC1, TC2, TC3...TCN), lesquels délivreront alors en retour au filtre de réseau NFLT, *via* le module de gestion MNGM, les paquets de données hiérarchisées tronqués Tepi correspondant aux paquets Epi, lesquels paquets tronqués Tepi seront alors envoyés au réseau local WLAN via le système d'antenne d'émission/réception ANT en lieu et place des paquets d'entrée initiaux Epi.

Le mode de réalisation de l'invention décrit ici permet donc de reformater de manière préventive et non-discriminatoire chaque paquet de données Epi lorsqu'une surcharge du réseau local WLAN aura été détectée, puisque tout paquet de données Epi transitant au travers de l'élément intermédiaire dans une telle situation fera l'objet d'une troncature et d'un encodage hiérarchique. Ce principe permet ainsi d'assurer une certaine continuité de service à tous les usagers du réseau local, puisque la troncature hiérarchique ainsi réalisée favorise en principe au moins une transmission intégrale de chaque segment primaire, même en cas de perte d'un ou plusieurs segments secondaires du fait de la surcharge observée.

Dans des modes de mise en oeuvre de l'invention où l'encodage des paquets de données d'entrée Dpi en des paquets hiérarchisés Epi ne serait pas systématique mais au contraire facultatif, en tant qu'uniquement destiné à être exécuté en cas de surcharge du réseau local WLAN, les moyens d'encodage pourront être inclus au sein même du module de gestion MNGM et seront alors par exemple activés lorsque le signal d'information Cvol présentera une valeur supérieure à un seuil d'activation prédéterminé. Dans de tels modes de mise en oeuvre, les paquets de données d'entrée Dpi parviendront alors directement au filtre de réseau NFLT, qui les transmettra tels quels vers le système d'antenne d'émission/réception ANT en l'absence de toute surcharge du réseau local WLAN. Alternativement, si une surcharge du réseau local WLAN se produit et se trouve signalée au filtre de réseau NFLT au moyen du signal de contrôle Trk, ledit filtre de réseau NFLT enverra les paquets de données d'entrée Dpi au module de gestion MNGM qui assurera un encodage hiérarchique desdits paquets avant de les transmettre sous forme de paquets hiérarchisés Epi aux moyens de troncature (TC1, TC2, TC3...TCN), afin que lesdits paquets hiérarchisés Epi soient tronqués comme exposé précédemment.

Par ailleurs, bien qu'un tel mode de réalisation ne soit pas représenté ici, il est parfaitement envisageable d'utiliser l'invention pour réduire aussi le volume des données de sortie Dpo, en en organisant une troncature hiérarchique via le module de gestion MNGM avant leur envoi vers le réseau principal INTNW par le filtre de réseau NFLT.

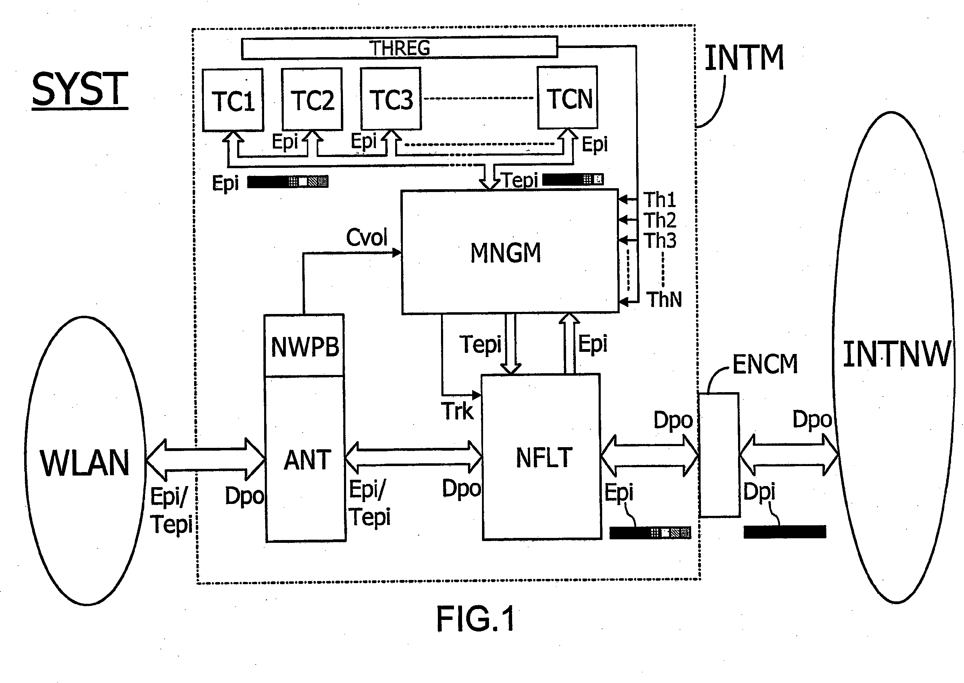

## Revendications

1. Système de télécommunication incluant au moins un réseau local destiné à communiquer avec un réseau principal *via* au moins un élément intermédiaire au travers duquel des paquets de données sont destinés à transiter depuis le réseau local vers le réseau principal et réciproquement, système **caractérisé en ce qu'**il inclut :
. des moyens d'évaluation (NWPB) d'un volume de communications en cours de déroulement au sein du réseau local, constitués par une sonde apte à capturer tout paquet de données qui circule au travers de l'élément intermédiaire (INTM), et destinés à générer un signal d'information (Cvol) ayant une valeur qui véhicule une information représentative d'une bande passante occupée au sein du réseau local à l'instant considéré,
. un module de gestion (MNGM) destiné à comparer la valeur dudit signal d'information (Cvol) à au moins un seuil prédéterminé (Th1-ThN), et
. des moyens de troncature (TC1-TCN) de paquets de données transitant au travers de l'élément intermédiaire, lesquels moyens de troncature sont destinés à être activés par ledit module de gestion lorsque la valeur dudit signal d'information est supérieure audit seuil prédéterminé.

2. Système de télécommunication selon la revendication 1, **caractérisé en ce que** les moyens de troncature incluent une pluralité de modules de troncature, chacun étant dédié à un genre particulier d'informations pouvant être véhiculé par les paquets de données et étant destiné à être activé lorsque la valeur dudit signal d'information est supérieure à un seuil prédéterminé associé au module de troncature considéré.

3. Système de télécommunication selon la revendication 2, **caractérisé en ce que** l'élément intermédiaire est muni d'une voie de requête vers un tiers, destinée à permettre audit élément intermédiaire de requérir auprès du tiers l'installation d'au moins un module de troncature supplémentaire à ceux déjà intégrés dans les moyens de troncature.

4. Système de télécommunication selon la revendication 3, **caractérisé en ce que** la valeur du seuil prédéterminé associé à chaque module de troncature peut être modifiée par téléchargement depuis le réseau principal suivant ladite voie de requête.

5. Système de télécommunication selon l'une quelconque des revendications 1 à 4. **caractérisé en ce que** ledit module de gestion est apte à générer un signal de contrôle destiné à signaler à un filtre de réseau (NFLT) que les paquets de données que ledit filtre de réseau reçoit depuis le réseau principal doivent être envoyés audit module de gestion, de manière à ce que ces paquets de données puissent être soumis à une troncature par les moyens de troncature.

6. Equipement formant point d'accès à un réseau principal depuis un réseau local,
des paquets de données étant destinés à transiter depuis le réseau local vers le réseau principal, et réciproquement, au travers dudit point d'accès, **caractérisé en ce qu'**il inclut :
. des moyens d'évaluation (NWPB) d'un volume de communications en cours de déroulement au sein du réseau local, constitués par une sonde apte à capturer tout paquet de données qui circule au travers dudit point d'accès (INTM), et destinés à générer un signal d'information (Cvol) ayant une valeur qui véhicule une information représentative d'une bande passante occupée au sein du réseau local à l'instant considéré,
. un module de gestion (MNGM) destiné à comparer la valeur dudit signal d'information (Cvol) à au moins un seuil prédéterminé (Th1-ThN), et
. des moyens de troncature (TC1-TCN) de paquets de données transitant au travers dudit point d'accès, lesquels moyens de troncature sont destinés à être activés par ledit module de gestion lorsque la valeur dudit signal d'information est supérieure audit seuil prédéterminé.

## Patentansprüche

1. Telekommunikationssystem, umfassend mindestens ein lokales Netzwerk, das dazu bestimmt ist, mit einem Hauptnetzwerk *über* mindestens ein Zwischenelement zu kommunizieren, durch das Datenpakete dazu bestimmt sind, von dem lokalen Netzwerk zu dem Hauptnetzwerk und umgekehrt zu fließen, wobei das System **dadurch gekennzeichnet ist, dass** es Folgendes umfasst:
- Evaluationsmittel (NWPB) eines Volumens an ablaufenden Kommunikationen im lokalen Netzwerk, die aus einer Sonde bestehen, die geeignet ist, jedes Datenpaket zu erfassen, das durch das Zwischenelement (INTM) fließt, und die dazu bestimmt sind, ein Informationssignal (Cvol) zu erzeugen, das einen Wert hat, der eine repräsentative Information einer Bandbreite übermittelt, die zum betrachteten Zeitpunkt in dem lokalen Netzwerk belegt ist,
- ein Verwaltungsmodul (MNGM), das dazu bestimmt ist, den Wert des Informationssignals (Cvol) mit mindestens einem vorbestimmten Schwellenwert (Th1-ThN) zu vergleichen und
- Mittel zum Abbrechen (TC1-TCN) von Datenpaketen, die durch das Zwischenelement fließen, wobei die Mittel zum Abbrechen dazu bestimmt sind, durch das Verwaltungsmodul aktiviert zu werden, wenn der Wert des Informationssignals den vorbestimmten Schwellenwert überschreitet.

2. Telekommunikationssystem nach Anspruch 1, **dadurch gekennzeichnet, dass** die Mittel zum Abbrechen mehrere Module zum Abbrechen aufweisen, die jeweils einer bestimmten Art von Informationen zugeordnet sind, die von den Datenpaketen übertragen werden können und dazu bestimmt sind, aktiviert zu werden, wenn der Wert des Informationssignals einen vorbestimmten Schwellenwert überschreitet, der mit dem betreffenden Modul zum Abbrechen verbunden ist.

3. Telekommunikationssystem nach Anspruch 2, **dadurch gekennzeichnet, dass** das Zwischenelement mit einer Anfrageroute an einen Dritten versehen ist, die dazu bestimmt ist, dem Zwischenelement zu gestatten, bei dem Dritten die Installation mindestens eines Moduls zum Abbrechen zusätzlich zu jenen, die bereits in den Mitteln zum Abbrechen integriert sind, anzufordern.

4. Telekommunikationssystem nach Anspruch 3, **dadurch gekennzeichnet, dass** der vorbestimmte Schwellenwert, der mit jedem Modul zum Abbrechen verbunden ist, durch Herunterladen von dem Hauptnetzwerk entlang der Anfrageroute geändert werden kann.

5. Telekommunikationssystem nach einem der Ansprüche 1 bis 4, **dadurch gekennzeichnet, dass** das Verwaltungsmodul geeignet ist, ein Steuersignal zu erzeugen, das dazu bestimmt ist, einem Netzwerkfilter (NFLT) zu signalisieren, dass die Datenpakete, die der Netzwerkfilter von dem Hauptnetzwerk empfängt, an das Verwaltungsmodul gesendet werden sollen, so dass diese Datenpakete durch die Mittel zum Abbrechen abgebrochen werden können.

6. Vorrichtung, die einen Zugangspunkt zu einem Hauptnetzwerk von einem lokalen Netzwerk bildet, wobei Datenpakete dazu bestimmt sind, von dem lokalen Netzwerk zu dem Hauptnetzwerk und umgekehrt durch diesen Zugangspunkt zu fließen, **dadurch gekennzeichnet, dass** sie Folgendes umfasst:
- Evaluationsmittel (NWPB) eines Volumens an ablaufenden Kommunikationen im lokalen Netzwerk, die aus einer Sonde bestehen, die geeignet ist, jedes Datenpaket zu erfassen, das durch das Zwischenelement (INTM) fließt, und die dazu bestimmt sind, ein Informationssignal (Cvol) zu erzeugen, das einen Wert hat, der eine repräsentative Information einer Bandbreite übermittelt, die zum betrachteten Zeitpunkt in dem lokalen Netzwerk belegt ist,
- ein Verwaltungsmodul (MNGM), das dazu bestimmt ist, den Wert des Informationssignals (Cvol) mit mindestens einem vorbestimmten Schwellenwert (Th1-ThN) zu vergleichen und
- Mittel zum Abbrechen (TC1-TCN) von Datenpaketen, die durch den Zugangspunkt fließen, wobei die Mittel zum Abbrechen dazu bestimmt sind, durch das Verwaltungsmodul aktiviert zu werden, wenn der Wert des Informationssignals den vorbestimmten Schwellenwert überschreitet.

## Claims

1. Telecommunication system including at least one local area network intended to communicate with a main network via at least one intermediate element through which data packets are intended to pass in transit from the local area network to the main network and vice-versa, system **characterized in that** it includes:
. means (NWPB) for evaluating a volume of communications currently in progress within the local area network and which consist of a probe able to capture any data packet which flows through the intermediate element (INTM) and which are intended to generate an information signal (Cvol) having a value which conveys information representative of a bandwidth occupied within the local area network at the instant considered;
. a management module (MNGM) intended to compare the value of said information signal (Cvol) with at least one predetermined threshold (Th1-ThN); and
. means (TC1-TCN) for truncating data packets passing in transit through the intermediate element, which truncation means are intended to be activated by said management module when the value of said information signal is above said predetermined threshold.

2. Telecommunication system according to Claim 1, **characterized in that** the truncation means include a plurality of truncation modules, each being dedicated to a particular kind of information that can be conveyed by the data packets and being intended to be activated when the value of said information signal is above a predetermined threshold associated with the truncation module considered.

3. Telecommunication system according to Claim 2, **characterized in that** the intermediate element is furnished with means for sending a request to a third party, intended to allow said intermediate element to request from the third party the installation of at least one truncation module additional to those already integrated into the truncation means.

4. Telecommunication system according to Claim 3, **characterized in that** the value of the predetermined threshold associated with each truncation module can be modified by downloading from the main network on said request pathway.

5. Telecommunication system according to any one of Claims 1 to 4, **characterized in that** said management module is able to generate a control signal intended to signal to a network filter (NFLT) that the data packets that said network filter receives from the main network must be dispatched to said management module, so that these data packets may be subjected to a truncation by the truncation means.

6. Equipment forming an access point to a main network from a local area network,
data packets being intended to pass in transit from the local area network to the main network, and vice-versa, through said access point, **characterized in that** it includes:
. means (NWPB) for evaluating a volume of communications currently in progress within the local area network and which consist of a probe able to capture any data packet which flows through said access point (INTM), and which are intended to generate an information signal (Cvol) having a value which conveys information representative of a bandwidth occupied within the local area network at the instant considered;
. a management module (MNGM) intended to compare the value of said information signal (Cvol) with at least one predetermined threshold (Th1-ThN); and
. means (TC1-TCN) for truncating data packets passing in transit through said access point, which truncation means are intended to be activated by said management module when the value of said information signal is above said predetermined threshold.
